# EUROPEAN PATENT SPECIFICATION

(11) **EP 0 637 985 B1**
(45) Date of publication and mention of the grant of the patent: **02.07.1997**
(21) Application number: 93909879.4
(22) Date of filing: 28.04.1993
(51) Int. Cl.: B01D 33/04, B01D 33/80, B01D 37/04

(54) **SEPARATING APPARATUS PROVIDED WITH MEASURING MEANS AND CORRESPONDING METHOD**
ABTRENNEINRICHTUNG MIT EINER MESSUNGSVORRICHTUNG UND ENTSPRECHENDES VERFAHREN
APPAREIL DE SEPARATION POURVU DE DISPOSITIFS DE MESURE ET METHODE CORRESPONDANTE

(30) Priority: 01.05.1992 NL 9200795
(43) Date of publication of application: 15.02.1995
(73) Proprietor: Pannevis B.V., NL-3542 AC Utrecht (NL)
(72) Inventor: DERENTHAL, Ulrich, D-6550 Bad Kreuznach (DE)
(74) Representative: Land, Addick Adrianus Gosling
(86) International application number: EP9301070
(87) International publication number: WO9322027

(56) References cited:
- EP-A- 0 316 997
- DE-A- 4 117 682
- FR-A- 2 194 466
- GB-A- 2 113 563
- DATABASE WPIL Week 9229, Derwent Publications Ltd., London, GB; AN 92-240672

## Description

Devices for separating into solid material and liquid a mixture thereof which make use of movable filtering means are known in very many variations e.g. from FR-A-2194466. So-called horizontal belt filters and drum filters as well as so-called tilting pan or table filters are for instance known for specific applications, in particular for chemical processes, and washing processes are also carried out on the movable filtering means, for instance for washing out an acidic solvent from which plastic granules have formed.

Two types of devices for separating into solid material and liquid a mixture thereof have been made commercially available by applicant. The first type relates to a device provided with a reciprocally movable suction box disposed beneath an endless movable filter cloth. Here an extremely good seal is obtained between suction box and filter cloth so that the liquid is drawn out of the mixture with sufficient suction force. The second type relates to a device provided with a belt of sealing material such as rubber moving along with the endless filter cloth.

In both the above stated types of separating device it is important to have the separation take place as efficiently and optimally as possible. Because the composition of the mixture can vary during the separating process the quantity of liquid on the cake of solid material changes. At the beginning and end of separating steps possibly different liquids may be mixed together. In practice, samples are usually taken from the solid material remaining behind on the movable filtering means in order to establish whether separating and/or washing has been taken place to a sufficient extent.

In EP-A-0316997 photodetectors are disclosed, which are provided on descrete positions along a gravity filter. In an industrial environment such photodetectors are liable to malfunction, because the glass before such photodetector can easily become contaminated.

The present invention has for its object to optimalize the above stated separating process and separating devices, that is, to impose and maintain the quality standard requirements for the solid material and liquid for disposal.

The present invention provides an apparatus for separating into solid material and liquid a mixture thereof, comprising:
- movable filtering means for filtering the mixture;
- feed means for supplying the mixture onto the filtering means;
- suction means for drawing off liquid from the mixture through the filtering means; and
- measuring means for continuously measuring a position of an edge of a liquid pool on the filtering means, said measuring means comprising a capacitive sensor extending on or shortly above the filtering means.

In preference the size of the pool is kept as constant as possible by coupling the measuring means to control means for instance for controlling the speed of movement of the filter cloth.

Although the control can of course also take place manually, a more uniform composition is usually obtained if this takes place automatically using control means. It is also conceivable to couple the control means to the feed means for supplying the mixture and/or the washing liquid, to the suction means and/or to a fan for feeding dry air for drying the solid material if such a fan is present, whether or not in combination with the coupling to the moving means.

The degree of suction brought about by the suction means is in any case dependent on the thickness and composition of the cake of solid material. The measuring means are formed by a capacitive sensor which, it has now been found, provides sufficiently accurate measurement results.

Further advantages, features and details of the present invention will become apparent in the light of a description of a preferred embodiment thereof, wherein reference is made to the annexed figure.

An apparatus 1 according to the present invention comprises a frame 2 to which rollers 3, 4 are rotatably mounted for guiding an endless filter cloth 5. A mixture of solid material and liquid is carried in the direction of arrow A onto the filter belt along a feed plate 6 disposed at an incline. The solid material from the mixture will usually fall directly onto the filter cloth 5, while the liquid comes to lie above the solid material. The filter cloth 5 is guided over a grid under which is situated a reciprocally movable suction box 9, whereby via line 10 the liquid is sucked out of the mixture through the cake of solid material, through the filter cloth 5 and through the grid.

The apparatus is further provided with measuring means which in the embodiment shown comprise a capacitive sensor which consists of a first electrode in the form of an electrical conductor 11 arranged close to the feed plate 6 and a second electrode in the form of an insulated conductor 12 which extends from the feed means to a predetermined position at a distance from the feed plate in the direction of arrow B, that is, in the direction of movement of the filtering means. Also because the separating device 1 will usually be disposed at a slight incline the liquid "pool" lies mainly above the cake of solid material in the area close to the feed plate 6 and the edge of the pool moves between feed plate 6 and point C at a distance therefrom. A displacement of the edge of the pool of liquid takes place when there are changes in the composition of the supplied mixture.

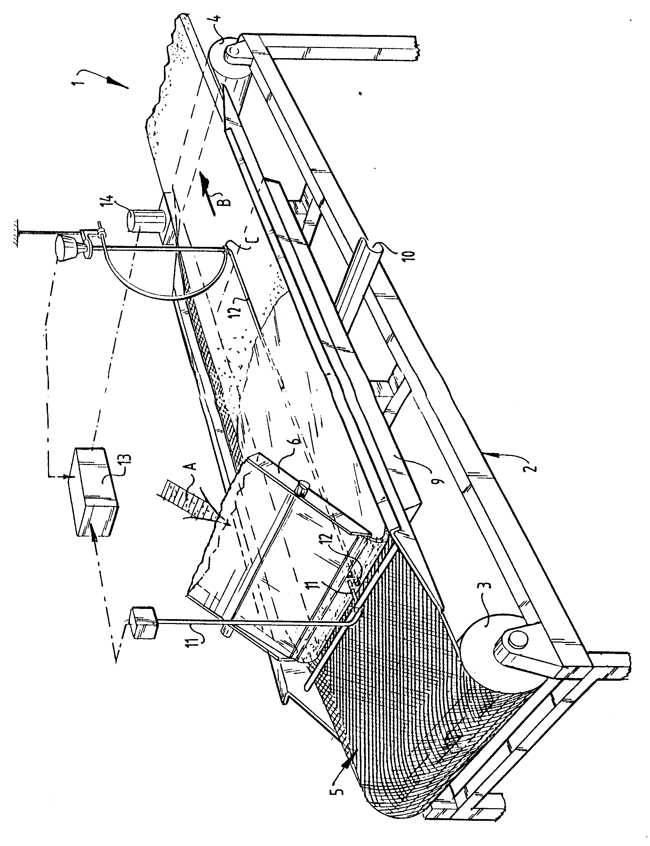

As shown schematically, the electrodes 11 and 12 are connected to a measuring apparatus 13 likewise forming part of the measuring means. Preferably also included in the measuring apparatus 13 are control means which, as also designated schematically, are coupled to drive means 14 for driving one of the rollers which determine the speed of movement of the filtering means. The degree of filtration can be held as constant as possible by adjusting this speed of movement, that is, the edge of the liquid pool can be kept at a roughly constant position between the position of feed plate 6 and point C in the figure. It is noted that the fixing of the electrodes 11 and 12 is shown highly schematically in the figure, since many variations are conceivable here.

It is remarked generally that the present invention is not limited to the embodiment shown and described. If for instance means for determining the thickness of the layer of solid material are also arranged in a manner not shown, all conceivable parameters of the solid material can be determined and applied to the controlling of the filtering process. The most important parameters are: grain size, grain size distribution, grain shape and grain structure and viscosity.

## Claims

1. An apparatus (1) for separating into solid material and liquid a mixture thereof, comprising:
- movable filtering means (3, 4, 5) for filtering the mixture;
- feed means (6) for supplying the mixture onto the filtering means (3, 4, 5); and
- suction means (9) for drawing off liquid from the mixture through the filtering means (5); characterized by
- measuring means (11, 12, 13) for continuously measuring a position of an edge of a liquid pool on the filtering means (3, 4, 5), said measuring means (11, 12, 13) comprising a capacitive sensor (11, 12) extending on or shortly above the filtering means (3, 4, 5).

2. An apparatus (1) according to claim 1, wherein the capacitive sensor comprises a first (11) and a second electrode (12) wherein the first electrode (11) is disposed in the area where the mixture is supplied by the feed means (6) and wherein the second electrode (12) extends from position close to the feed means (6) to a predetermined position at a distance from the feed means (6) in the direction of movement of the filtering means (3, 4, 5).

3. An apparatus (1) according to claim 1 or 2, provided with control means (13) for controlling the movement of the filtering means (3, 4, 5), the feed of the mixture and/or the suction force of the suction means (9).

4. An apparatus (1) according to claim 1, 2 or 3, wherein the filtering means (3, 4, 5) comprises an endless filter cloth (5).

5. An apparatus according to anyone of claims 1-4, wherein a reciprocally movable suction box (9) forming part of the suction means is arranged under the filtering means (3, 4, 5).

6. An apparatus as claimed in any of the claims 1-5, provided with treating means arranged beyond the second electrode (12) for further treatment of the solid material situated on the filtering means (3, 4, 5).

7. A method for separating into solid material and liquid a mixture thereof, comprising the following steps:
- moving filtering means (3, 4, 5) for filtering the mixture;
- supplying the mixture onto the filtering means (3, 4, 5); and
- drawing off liquid from the mixture through the filtering means (3, 4, 5) by suction, characterized by continuously measuring the position of an edge of the liquid pool on the filtering means (3, 4, 5) and continuously controlling the speed of movement of the filtering means, the feed of the mixture and/or the suction force dependent on the result of the measuring.

## Patentansprüche

1. Vorrichtung (1) zum Trennen einer Mischung in Feststoff und Flüssigkeit, mit
- einer beweglichen Filtriereinrichtung (3, 4, 5) zum Filtrieren der Mischung;
- einer Zufuhreinrichtung (6) zum Zuführen der Mischung auf die Filtriereinrichtung (3, 4, 5) und
- eine Saugeinrichtung zum Abziehen von Flüssigkeit aus der Mischung durch die Filtriereinrichtung (5) hindurch, **gekennzeichnet** durch
- eine Meßeinrichtung (11, 12, 13) zum kontinuierlichen Messen der Lage einer Kante eines Flüssigkeitssumpfes auf der Filtriereinrichtung (3, 4, 5), wobei die Meßeinrichtung (11, 12, 13) einen kapazitiven Sensor (11, 12) aufweist, der auf oder knapp oberhalb der Filtriereinrichtung (3, 4, 5) verläuft.

2. Vorrichtung (1) nach Anspruch 1,
bei der der kapazitive Sensor eine erste (11) und eine zweite Elektrode (12) aufweist, wobei die erste Elektrode (11) in dem Bereich angeordnet ist, wo die Mischung durch die Zuführeinrichtung (6) zugeführt wird, und wobei die zweite Elektrode (12) sich von einer Stelle nahe der Zuführeinrichtung (6) bis zu einer vorgegebenen Position im Abstand von der Zuführeinrichtung (6) in der Bewegungsrichtung der Filtriereinrichtung (3, 4, 5) erstreckt.

3. Vorrichtung (1) nach Anspruch 1 oder 2,
mit einer Steuereinrichtung (13) zum Steuern der Bewegung der Filtriereinrichtung (3, 4, 5), der Zuführung der Mischung und/oder der Saugkraft der Saugeinrichtung (9).

4. Vorrichtung (1) nach Anspruch 1, 2 oder 3,
bei der die Filtriereinrichtung (3, 4, 5) ein endloses Filtergewebe (5) aufweist.

5. Vorrichtung nach einem der Ansprüche 1 bis 4,
bei der ein hin- und herbeweglicher Saugkasten (9), der ein Teil der Saugeinrichtung ist, unter der Filtriereinrichtung (3, 4, 5) angeordnet ist.

6. Vorrichtung nach einem der Ansprüche 1 bis 5,
mit einer jenseits der zweiten Elektrode (12) angeordneten Behandlungseinrichtung zur weiteren Behandlung des sich auf der Filtriereinrichtung (3, 4, 5) befindlichen Feststoffes.

7. Verfahren zum Trennen einer Mischung in Feststoff und Flüssigkeit, mit den folgenden Schritten:
- Bewegen einer Filtriereinrichtung (3, 4, 5) zum Filtrieren der Mischung;
- Zuführen der Mischung auf die Filtriereinrichtung (3, 4, 5) und
- Abziehen von Flüssigkeit von der Mischung durch die Filtriereinrichtung (3, 4, 5) hindurch durch Absaugen, **gekennzeichnet** durch kontinuierliches Messen der Position einer Kante des Flüssigkeitssumpfes auf der Filtriereinrichtung (3, 4, 5) und zum ständigen Steuern der Bewegungsgeschwindigkeit der Filtriereinrichtung, der Zufuhr der Mischung und/oder der Saugkraft in Abhängigkeit von dem Meßergebnis.

## Revendications

1. Appareil (1) pour séparer en matériaux solides et en liquide un mélange de ces derniers, comprenant:
- un moyen de filtration mobile (3, 4, 5) pour filtrer le mélange;
- des moyens d'alimentation (6) pour fournir le mélange sur le moyen de filtration (3, 4, 5); et
- des moyens d'aspiration (9) pour extraire le liquide du mélange en l'aspirant par des moyens de filtration (5); et caractérisé par
- des moyens de mesure (11, 12, 13) pour mesurer, en continu, une position d'un bord d'un bain de liquide sur le moyen de filtration (3, 4, 5), ledit moyen de mesure (11, 12, 13) comprenant un capteur capacitif s'étendant sur ou légèrement au-dessus du moyen de filtration (3, 4, 5).

2. Appareil (1) selon la revendication 1, selon lequel le capteur capacitif comprend une première (11) et une deuxième (12) électrodes, selon lesquelles la première électrode (11) est placée dans la zone dans laquelle le mélange est fourni par le moyen d'alimentation (6) et dans laquelle la deuxième électrode (12) s'étend à partir de la position proche du moyen d'alimentation (6) jusqu'à une position prédéterminée, à une certaine distance du moyen d'alimentation (6) dans le sens de déplacement du moyen de filtration (3, 4, 5).

3. Appareil (1) selon la revendication 1 ou 2, pourvu de moyens de commande (13) pour commander le déplacement du moyen de filtration (3, 4, 5), l'alimentation du mélange et/ou la force d'aspiration du moyen d'aspiration (9).

4. Appareil (1) selon la revendication 1, 2 ou 3, selon lequel le moyen de filtration (3, 4, 5) comprend une toile de filtre sans fin (5).

5. Appareil selon l'une quelconque des revendications 1 - 4, selon lequel une caisse aspirante (9) animée d'un mouvement alternatif faisant partie du moyen d'aspiration est prévue sous le moyen de filtration (3, 4, 5).

6. Appareil selon l'une quelconque des revendications 1 - 5, pourvu de moyens de traitement disposés au-delà de la deuxième électrode (12) en vue du traitement ultérieur du matériau solide situé sur le moyen de filtration (3, 4, 5).

7. Procédé pour séparer en matériaux solides et en liquide un mélange de ces derniers, comprenant les étapes suivantes:
- déplacement du moyen de filtration (3, 4, 5) pour filtrer le mélange;
- fourniture du mélange sur le moyen de filtration (3, 4, 5); et
- extraction du liquide en l'aspirant du mélange à travers le moyen de filtration (3, 4, 5) par aspiration, caractérisé en ce qu'il consiste à mesurer en continu la position d'un bord du bain de liquide sur le moyen de filtration (3, 4, 5) et à commander, en continu, la vitesse de déplacement du moyen de filtration, l'alimentation du mélange et/ou la force d'aspiration en fonction du résultat des mesures.
